(19) Europäisches Patentamt
European Patent Office
Office européen des brevets

(11) **EP 2 199 334 A1**

(12) **EUROPEAN PATENT APPLICATION**
published in accordance with Art. 153(4) EPC

(43) Date of publication:
**23.06.2010 Bulletin 2010/25**

(51) Int Cl.:
**C08L 7/00** (2006.01) **B60C 1/00** (2006.01)
**C08K 3/36** (2006.01) **C08L 9/00** (2006.01)

(21) Application number: **08837526.6**

(22) Date of filing: **01.10.2008**

(86) International application number:
**PCT/JP2008/067803**

(87) International publication number:
**WO 2009/048006 (16.04.2009 Gazette 2009/16)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **10.10.2007 JP 2007264456**

(71) Applicant: **Sumitomo Rubber Industries, Ltd.
Kobe-shi, Hyogo 651-0072 (JP)**

(72) Inventors:
• **KIKUCHI, Naohiko
Kobe-shi
Hyogo 651-0072 (JP)**
• **KOJIMA, Ryoji
Kobe-shi
Hyogo 651-0072 (JP)**

(74) Representative: **Manitz, Gerhart
Manitz, Finsterwald & Partner GbR
Martin-Greif-Strasse 1
80336 München (DE)**

(54) **RUBBER COMPOSITION FOR THE TREAD TO BE USED IN STUDLESS TIRE AND STUDLESS TIRES WITH TREADS MADE BY USING THE SAME**

(57)     It is an object of the present invention to lessen strain dependency of hardness of a tread rubber used for a studless tire, have good performance on snow and ice while securing rigidity on non-snow roads, and improve abrasion resistance. The present invention provides a rubber composition for tread used for a studless tire comprising 30 to 150 parts by weight as a total of (1) silica with a nitrogen absorption specific surface area of at most 100 m$^2$/g and (2) silica with a nitrogen absorption specific surface area of at least 180 m$^2$/g based on 100 parts by weight of a rubber component in which a content of a natural rubber and/or a polybutadiene rubber is at least 80 % by weight, wherein contents of silica (1) and silica (2) satisfy the formula below:

$$[\text{Content of silica (1)}] \times 0.2 \le [\text{Content of silica (2)}] \le [\text{Content of silica (1)}] \times 6.5,$$

tan δ peak temperature Tg is at most -50°C, and rubber hardness at 0°C is at most 64.

**EP 2 199 334 A1**

**Description**

TECHNICAL FIELD

The present invention relates to a rubber composition for tread used for a studless tire and a studless tire having tread using the rubber composition.

BACKGROUND ART

Carbon black has been often used as fillers for providing high reinforcing property and superior abrasion resistance in order to improve abrasion resistance. In order to further improve the abrasion resistance of a pneumatic tire, it is considered that the filling quantity of carbon black is enlarged or carbon black with a smaller particle diameter is used.

Further, although the use of a studded tire or installation of a chain on a tire has been carried out for running on snow and ice road surfaces, a studless tire is developed as a tire for running on snow and ice road surfaces in place of these technique because an environmental problem such as a dust problem is generated. Since friction coefficient is remarkably lowered on snow and ice road surfaces and tires slide easily in comparison with general road surfaces, arrangements on materials and designs have been carried out for a studless tire and a studless tire excellent in braking performance on ice has been developed.

In Japanese Unexamined Patent Publication No. 2006-233177, in order to improve rolling resistance performance, wet skid performance, and the steering stability of a vehicle in a good balance and to further produce a tire capable of low fuel consumption, there are disclosed a rubber composition compounding silica with low nitrogen absorption specific surface area and silica with high nitrogen absorption specific area and setting the mixing ratio of the contents of 2 kinds of silica at a predetermined range, as well as a tire having tread using the rubber composition. However, since hardness at low temperature and properties at low temperature, which are important requisites on performance on snow and ice, are not considered, problems remain yet.

DISCLOSURE OF INVENTION

It is an object of the present invention to provide a rubber composition excellent in abrasion resistance, which lessens strain dependency of hardness of a tread rubber for a studless tire and has good performance on snow and ice while securing rigidity on non-snow roads.

The present invention relates to a rubber composition for tread used for a studless tire comprising 30 to 150 parts by weight as a total of (1) silica with a nitrogen absorption specific surface area of at most 100 $m^2$/g and (2) silica with a nitrogen absorption specific surface area of at least 180 $m^2$/g based on 100 parts by weight of a rubber component in which a content of a natural rubber and/or a polybutadiene rubber is at least 80 % by weight, wherein contents of silica (1) and silica (2) satisfy the formula below:

$$[\text{Content of silica (1)}] \times 0.2 \leq [\text{Content of silica (2)}] \leq [\text{Content of silica (1)}] \times 6.5,$$

tan δ peak temperature (Tg) is at most -50°C, and
rubber hardness at 0°C is at most 64.

The rubber component is preferably a rubber component comprising 20 to 80 % by weight of the natural rubber and 20 to 80 % by weight of the polybutadiene rubber.

Further, the present invention relates to a studless tire having tread using the rubber composition for tread used for a studless tire.

BEST MODE FOR CARRYING OUT THE INVENTION

The rubber composition for tread used for a studless tire of the present invention includes a rubber component, (1) silica with a nitrogen absorption specific surface area of at most 100 $m^2$/g (hereinafter, called as silica (1)), and (2) silica with a nitrogen absorption specific surface area of at least 180 $m^2$/g (hereinafter, called as silica (2)), in which tan δ peak temperature (Tg) is at most -50°C and rubber hardness at 0°C is at most 64.

In the rubber component, the content of a natural rubber (NR) and/or a polybutadiene rubber (BR) is at least 80 % by weight and preferably at least 90 % by weight because the change of temperature property at low temperature is little.

As the rubber component other than NR and BR, a diene rubber is preferable. As the diene rubber, for example, an isoprene rubber (IR), a styrene-butadiene rubber (SBR), an acrylonitrile-butadiene rubber (NBR), a chloroprene rubber (CR), a butyl rubber (IIR), and a styrene-isoprene-butadiene copolymer rubber (SIBR) can be used. These diene rubbers may be used alone or at least 2 kinds thereof may be used in combination.

Further, the rubber component preferably comprises 20 to 80 % by weight of NR and 20 to 80 % by weight of BR because it is superior in the low temperature property and kneading processability of the rubber. A rubber component comprising 30 to 80 % by weight of NR and 30 to 80 % by weight of BR is more preferable.

As silica (1) and (2), for example, silica (silicic acid anhydride) obtained by a dry process and silica (hydrous silicic acid) obtained by a wet process are exemplified, and silica obtained by the wet process is preferable in particular.

The nitrogen absorption specific surface area (hereinafter, called as $N_2SA$) of silica (1) is at most 100 $m^2/g$, preferably at most 80 $m^2/g$, and more preferably at most 60 $m^2/g$. When the $N_2SA$ of silica (1) exceeds 100 $m^2/g$, the effect obtained by mixing with silica (2) is little. Further, the $N_2SA$ of silica (1) is preferably at least 20 $m^2/g$ and more preferably at least 30 $m^2/g$. When the $N_2SA$ of silica (1) is less than 20 $m^2/g$, strength at break of the rubber composition tends to be lowered.

The content of silica (1) is preferably at least 10 parts by weight and more preferably at least 20 parts by weight based on 100 parts by weight of the rubber component. When the content of silica (1) is less than 10 parts by weight, rolling resistance tends not to be adequately reduced. Further, the content of silica (1) is preferably at most 120 parts by weight and more preferably at most 80 parts by weight. When the content of silica (1) exceeds 120 parts by weight, strength at break tends to be lowered.

The $N_2SA$ of silica (2) is at least 180 $m^2/g$, preferably at least 190 $m^2/g$, and more preferably at least 200 $m^2/g$. When the $N_2SA$ of silica (2) is less than 180 $m^2/g$, the effect obtained by mixing with silica (1) is little. Further, the $N_2SA$ of silica (2) is preferably at most 300 $m^2/g$ and more preferably at most 240 $m^2/g$. When the $N_2SA$ of silica (2) exceeds 300 $m^2/g$, processability tends to be deteriorated.

The content of silica (2) is preferably at least 5 parts by weight and more preferably at least 10 parts by weight based on 100 parts by weight of the rubber component. When the content of silica (2) is less than 5 parts by weight, adequate steering stability tends not to be obtained. Further, the content of silica (2) is preferably at most 100 parts by weight and more preferably at most 60 parts by weight. When the content of silica (2) exceeds 100 parts by weight, processability tends to be deteriorated.

The total content of silica (1) and silica (2) is preferably at least 30 parts by weight, preferably at least 40 parts by weight, and more preferably at least 50 parts by weight based on 100 parts by weight of the rubber component. When the total content of silica (1) and silica (2) is less than 30 parts by weight, the reinforcing effect by the addition of silica (1) and silica (2) is not adequately obtained. Further, the total content of silica (1) and silica (2) is at most 150 parts by weight, preferably at most 120 parts by weight, and more preferably at most 100 parts by weight. When the total content of silica (1) and silica (2) exceeds 150 parts by weight, silica is difficult to be homogeneously dispersed in the rubber composition and processability of the rubber composition is deteriorated.

The content of silica (1) and the content of silica (2) satisfy the formula below.

$$[\text{Content of silica (1)}] \times 0.2 \leq [\text{Content of silica (2)}] \leq [\text{Content}$$

$$\text{of silica (1)}] \times 6.5$$

The content of silica (2) is at least 0.2-fold of the content of silica (1) and preferably at least 0.5-fold thereof. When the content of silica (2) is less than 0.2-fold of the content of silica (1), steering stability is lowered. Further, the content of silica (2) is at most 6.5-fold of the content of silica (1), preferably at most 4-fold, and more preferably at most equal fold (1-fold) thereof. When the content of silica (2) is more than 6.5-fold of the content of silica (1), rolling resistance is increased.

In the present invention, abrasion resistance performance and performance on snow and ice can be wholly improved in good balance by compounding predetermined amounts of silica (1) and silica (2) into the rubber component and kneading them.

In the present invention, a silane coupling agent is preferably used together with silica (1) and silica (2) in combination. The silane coupling agent is not specifically limited and those having been conventionally used in the tire industry in combination with silica can be used. For example, bis(3-triethoxysilylpropyl)tetrasulfide, bis(3-trimethoxysilylpropyl)tetrasulfide, bis(2-triethoxysilylpropyl)tetrasulfide, 3-mercaptopropyltriethoxysilane, 2-mercaptoethyltrimethoxysilane, and the like are exemplified. These can be used alone respectively, or can be arbitrarily used in combination.

When the silane coupling agent is included, the content of the silane coupling agent is preferably at least 4 parts by weight based on 100 parts by weight of silica and more preferably at least 6 parts by weight, because kneading processability and abrasion resistance performance can be secured. Further, the content of the silane coupling agent is preferably at most 20 parts by weight and more preferably 15 parts by weight, because the effect for addition amount and economical efficiency are superior.

The tan δ peak temperature (Tg) of the rubber composition for tread used for a studless tire of the present invention is at most -50°C and preferably at most -52°C because increase in rubber hardness at low temperature can be suppressed. When the tan δ peak temperature Tg of the rubber composition is higher than -50°C, temperature dependence is enlarged and performance on snow and ice is lowered because property at low temperature is deteriorated. Further, the tan δ peak temperature (Tg) of the rubber composition for tread used for a studless tire of the present invention is preferably at least -90°C because of the lower limit value of the rubber component selected.

The rubber hardness at 0°C of the rubber composition for tread used for a studless tire of the present invention is at most 64 and preferably at most 60 because good performance on snow and ice can be secured. When the rubber hardness at 0°C of the rubber composition is more than 64, adequate performance on snow and ice is not obtained. Further, the rubber hardness at 0°C of the rubber composition for tread used for a studless tire of the present invention is preferably at least 35 and more preferably at least 40 because steering response property in steering stability can be improved. When the rubber hardness at 0°C of the rubber composition is less than 35, a vehicle body wobbles at curve and stability tends to be deteriorated.

The rubber composition of the present invention can include the quantities usually used according to requirement of carbon black, clay, aluminum hydroxide, fillers for reinforcement such as silica other than silica (1) and silica (2), antioxidants, softening agents, zinc oxide, stearic acid, wax, vulcanizing agents other than organic vulcanizing agents, silane coupling agents, vulcanization accelerators, and processing aids that are generally used in the production of the rubber composition, in addition to the rubber component, silica (1) and silica (2).

The studless tire of the present invention preferably comprises the aforementioned rubber composition and preferably has tread using the rubber composition in particular. Further, this tread can be prepared by a process of laminating sheets of the rubber composition in a predetermined shape, or a process of inserting the rubber composition into at least 2 extruders and forming 2 layers thereof at the head exit of the extruders.

EXAMPLES

The present invention is specifically illustrated based on Examples, but the present invention is not limited only to these.

Various chemicals used in Examples and Comparative Examples are specifically described below.

Natural rubber (NR): RSS#1

Polybutadiene rubber (BR): BR150L manufactured by Ube Industries Ltd.

Silica (1): Ultrasil 360 (hydrous silica produced by a wet process, and $N_2SA$: 50 $m^2$/g) available from Evonik Degussa GmbH (silica (1) of the present invention)

Silica (2): Zeosil 1205MP (hydrous silica produced by a wet process, and $N_2SA$: 200 $m^2$/g) available from ROHDIA S.A. (silica (2) of the present invention)

Silica (3): Ultrasil VN3 (hydrous silica produced by a wet process, and $N_2SA$: 175 $m^2$/g) available from Evonik Degussa GmbH

Silane coupling agent: TESPT: Si69 (bis(3-triethoxysilylpropyl)tetrasulfide) available from Evonik Degussa GmbH

Naphthenic oil: PROCESS P-200 manufactured by Japan Energy Co., Ltd.

Antioxidant: Ozonone 6C (N-(1,3-dimethylbutyl)-N'-phenyl-p-phenylenediamine) available from Seiko Chemical Co., Ltd.

Wax: SUNNOC Wax available from OUCHISHINKO CHEMICAL INDUSTRIAL CO., LTD.

Stearic acid: "Kiri" available from NOF CORPORATION

Zinc oxide: ZINC OXIDE #2 available from Mitsui Mining and Smelting Co., Ltd.

Sulfur: Powder sulfur available from Karuizawa Sulfur Co., Ltd.

Vulcanization accelerator CZ: NOCCELER CZ (N-cyclohexyl-2-benzothiazylsulfenamide) available from OUCHISHINKO CHEMICAL INDUSTRIAL CO., LTD.

EXAMPLES 1 to 6 and COMPARATIVE EXAMPLES 1 to 3

NR and BR or silica (1) to (3), a silane coupling agent, naphthenic oil, an antioxidant, wax, stearic acid and zinc oxide were kneaded for 3 minutes according to the compounding contents shown in Tables 1 and 2 using a Banbury mixer. And further, sulfur as a vulcanizing agent and a vulcanization accelerator were kneaded with a roll to obtain respective kneaded articles. The respective kneaded articles were molded in the shape of tread respectively, laminated with other tire members and vulcanized at 165°C for 25 minutes, to produce test tires (tire size: 195/65R15) of Examples 1 to 6 and Comparative Examples 1 to 3.

(Tan δ peak temperature (Tg))

The tan δ peak temperature was measured as a glass transition temperature (Tg) from a temperature distribution curve of tan δ measured under the conditions of a frequency of 10 Hz, an initial strain of 10 Hz, an amplitude of $\pm$ 0.25 %, and a temperature rising speed of 2°C/min, using a viscoelastic spectrometer manufactured by Iwamoto Seisakusyo K.K.

(Rubber hardness at 0°C)

The rubber hardnesses at 0°C were measured with a type A durometer according to JIS K6253. The lower the value is, the better the performance on snow and ice is.

(Abrasion resistance)

The abrasion quantities of test samples in the Lambourn abrasion test were measured under the conditions of a surface rotational speed of a test piece of 40 m/min, a slip rate of 20 %, a loaded load of 15N, and a drop quantity of a dusting powder agent of 20 g/min using an improved Lambourn abrasion tester manufactured by Iwamoto Seisakusyo K.K. in accordance with JIS K6264-2. The Lambourn abrasion index of Comparative Example 1 was referred to as 100 and the abrasion quantities of respective compoundings were displayed by indices according to the calculation formula below. It is indicated that the larger the value of the Lambourn abrasion index is, the less the abrasion quantity is and the more superior the abrasion resistance is.

$$\text{(Lambourn abrasion index)} = \text{(Abrasion quantity of Comparative Example 1)} \div \text{(Abrasion quantity of each of compoundings)} \times 100$$

(Braking performance on ice)

Test tires (tire size: 195/65R15) produced were mounted on a test car (a domestically produced FR car of 2000 cc). A lock brake was footed on an ice board at 30 km/h, a stoppage distance necessary for stoppage was measured, the braking index on ice of Comparative Example 1 was referred to as 100 and the stoppage distances of the respective compoundings were displayed by indices according to the calculation formula below. It is indicated that the larger the value of braking index on ice is, the shorter the distance till stoppage is and the more superior the braking performance on ice, namely, performance on snow and ice is.

$$\text{(Braking index on ice)} = \text{(Stoppage distance of Comparative Example 1)} \div \text{(Stoppage distance of each of compoundings)} \times 100$$

Tables 1 and 2 show respective evaluation results of the tan δ peak temperature (Tg), rubber hardness at 0°C, Lambourn abrasion index, and braking index on ice in each of Examples 1 to 6 and Comparative Examples 1 to 3.

TABLE 1

| | Ex. | | Com. Ex. | | |
|---|---|---|---|---|---|
| | 1 | 2 | 1 | 2 | 3 |
| Compounding amount (parts by weight) | | | | | |
| NR | 60 | 60 | 60 | 60 | 60 |

(continued)

| Compounding amount (parts by weight) | | | | | |
|---|---|---|---|---|---|
| BR | 40 | 40 | 40 | 40 | 40 |
| Silica (1) | 40 | 48 | - | 57 | 5 |
| Silica (2) | 20 | 12 | - | 3 | 55 |
| Silica (3) | - | - | 60 | - | - |
| Silane coupling agent | 4.8 | 4.8 | 4.8 | 4.8 | 4.8 |
| Naphthenic oil | 30 | 30 | 30 | 30 | 30 |
| Antioxidant | 2 | 2 | 2 | 2 | 2 |
| Wax | 2 | 2 | 2 | 2 | 2 |
| Stearic acid | 2 | 2 | 2 | 2 | 2 |
| Zinc oxide | 3 | 3 | 3 | 3 | 3 |
| Sulfur | 1.5 | 1.5 | 1.5 | 1.5 | 1.5 |
| Vulcanization accelerator CZ | 1 | 1 | 1 | 1 | 1 |
| Evaluation result | | | | | |
| Tan δ peak temperature | -59 | -59 | -59 | -59 | -59 |
| Hardness at 0°C | 42 | 42 | 42 | 39 | 50 |
| Lambourn abrasion index | 108 | 102 | 100 | 74 | 113 |
| Braking index on ice | 110 | 108 | 100 | 115 | 95 |

TABLE 2

| | Ex. | | | |
|---|---|---|---|---|
| | 3 | 4 | 5 | 6 |
| Compounding amount (parts by weight) | | | | |
| NR | 60 | 60 | 60 | 60 |
| BR | 40 | 40 | 40 | 40 |
| Silica (1) | 40 | 40 | 48 | 48 |
| Silica (2) | 10 | 40 | 20 | 48 |
| Silica (3) | - | - | - | - |
| Silane coupling agent | 4 | 6.4 | 5.44 | 7.68 |
| Naphthenic oil | 25 | 50 | 38 | 54 |
| Antioxidant | 2 | 2 | 2 | 2 |
| Wax | 2 | 2 | 2 | 2 |
| Stearic acid | 2 | 2 | 2 | 2 |
| Zinc oxide | 3 | 3 | 3 | 3 |
| Sulfur | 1.5 | 1.5 | 1.5 | 1.5 |
| Vulcanization accelerator CZ | 1 | 1 | 1 | 1 |
| Evaluation result | | | | |
| Tan δ peak temperature | -58 | -62 | -60 | -64 |
| Hardness at 0°C | 41 | 43 | 42 | 44 |
| Lambourn abrasion index | 100 | 120 | 110 | 122 |
| Braking index on ice | 112 | 108 | 108 | 105 |

It is known that Examples 1 and 2 each using blend of silica (1) and silica (2) at a specific proportion are superior in abrasion resistance and performance on ice in good balance, in comparison with Comparative Example 1 using silica (3) that is generally used.

Further, it is found out that Comparative Example 2 using silica (1) and silica (2) blending without satisfying a specific proportion is inferior in abrasion resistance and Comparative Example 3 is inferior in performance on ice.

INDUSTRIAL APPLICABILITY

According to the present invention, there can be provided a rubber composition excellent in abrasion resistance, which lessens strain dependency of hardness of a tread rubber for a studless tire and has good performance on snow and ice while securing rigidity on non snow roads, by compounding silica with a low nitrogen absorption specific surface area and silica with a high nitrogen absorption specific surface area and setting the mixing ratio of the contents of these 2 kinds of silica in a predetermined range.

**Claims**

1.  A rubber composition for tread used for a studless tire comprising
    30 to 150 parts by weight as a total of:

    (1) silica with a nitrogen absorption specific surface area of at most 100 m$^2$/g; and
    (2) silica with a nitrogen absorption specific surface area of at least 180 m$^2$/g,
    based on 100 parts by weight of a rubber component in which a content of a natural rubber and/or a polybutadiene rubber is at least 80 % by weight,
    wherein contents of silica (1) and silica (2) satisfy the formula below:

$$[\text{Content of silica (1)}] \times 0.2 \le [\text{Content of silica (2)}] \le [\text{Content of silica (1)}] \times 6.5,$$

    tan δ peak temperature (Tg) is at most -50°C, and
    rubber hardness at 0°C is at most 64.

2.  The rubber composition for tread used for a studless tire of Claim 1, wherein the rubber component is a rubber component comprising 20 to 80 % by weight of the natural rubber and 20 to 80 % by weight of the polybutadiene rubber.

3.  A studless tire having tread using the rubber composition for tread used for a studless tire of Claim 1 or 2.

**Amended claims under Art. 19.1 PCT**

1. (Amended) A rubber composition for tread used for a studless tire comprising
    30 to 150 parts by weight as a total of:

    (1) silica with a nitrogen absorption specific surface area of at most 60 m$^2$/g; and
    (2) silica with a nitrogen absorption specific surface area of at least 180 m$^2$/g,
    based on 100 parts by weight of a rubber component in which a content of a natural rubber and/or a polybutadiene rubber is at least 80 % by weight,
    wherein contents of silica (1) and silica (2) satisfy the formula below:

$$[\text{Content of silica (1)}] \times 0.2 \le [\text{Content of silica (2)}] \le [\text{Content of silica (1)}] \times 6.5,$$

    tan δ peak temperature (Tg) is at most -50°C, and
    rubber hardness at 0°C is at most 64.

2. The rubber composition for tread used for a studless tire of Claim 1, wherein the rubber component is a rubber component comprising 20 to 80 % by weight of the natural rubber and 20 to 80 % by weight of the polybutadiene rubber.

**3.** A studless tire having tread using the rubber composition for tread used for a studless tire of Claim 1 or 2.


**Statement under Art. 19.1 PCT**

Claim 1 is clearly distinguished from document 1 by defining a range of a nitrogen absorption specific surface area ($N_2SA$) of silica (1) as "at most 60 m$^2$/g" on the ground of the specification of the present application on paragraph [0014].

Document 1 describes the first silica having BET specific surface area of at least 150 m$^2$/g and at most 220 m$^2$/g and the second silica having BET specific surface area of at least 70 m$^2$/g and less than 150 m$^2$/g. However, document 1 does not describe the use of silica having $N_2SA$ of at most 60 m$^2$/g. Therefore, the present invention of claim 1 is not described in document 1 and possesses novelty.

According to the present invention of Claim 1, by compounding silica with low $N_2SA$ and silica with high $N_2SA$ into the specific rubber component and defining the specific tan $\delta$ peak temperature (Tg) and the specific rubber hardness at 0°C, there can be provided a rubber composition excellent in abrasion resistance, which lessens strain dependency of hardness of a tread rubber for a studless tire and has good performance on snow and ice while securing rigidity on non snow roads. Therefore, the present invention of Claim 1 possesses inventive step over documents 1 to 5.

## INTERNATIONAL SEARCH REPORT

| International application No. |
|---|
| PCT/JP2008/067803 |

A. CLASSIFICATION OF SUBJECT MATTER
*C08L7/00*(2006.01)i, *B60C1/00*(2006.01)i, *C08K3/36*(2006.01)i, *C08L9/00*
(2006.01)i

According to International Patent Classification (IPC) or to both national classification and IPC

B. FIELDS SEARCHED

Minimum documentation searched (classification system followed by classification symbols)
C08L7/00-21/00, B60C1/00, C08K3/36

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-238803 A (Toyo Tire and Rubber Co.,<br>Ltd.),<br>20 September, 2007 (20.09.07),<br>Claim 1; Par. No. [0002]<br>(Family: none) | 1-3<br>1-3 |
| Y | JP 2006-233177 A (Sumitomo Rubber Industries,<br>Ltd.),<br>07 September, 2006 (07.09.06),<br>Claims 1, 3; Par. No. [0013]<br>& US 2006-0173118 A1    & EP 001686151 A1 | 1-3 |
| Y | JP 2007-056137 A (Sumitomo Rubber Industries,<br>Ltd.),<br>08 March, 2007 (08.03.07),<br>Claims; Par. No. [0008]<br>(Family: none) | 1-3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    11 December, 2008 (11.12.08) | Date of mailing of the international search report<br>    22 December, 2008 (22.12.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/067803 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2004-059629 A  (Sumitomo Rubber Industries, Ltd.), 26 February, 2004 (26.02.04), Claims; Par. Nos. [0001], [0041] & US 2004-0019135 A1   & EP 001384600 A2 | 1-3 |
| Y | JP 2007-112928 A  (Bridgestone Corp.), 10 May, 2007 (10.05.07), Claim 1; Par. Nos. [0001], [0007] (Family: none) | 1-3 |
| P,A | JP 2008-001826 A  (The Yokohama Rubber Co., Ltd.), 10 January, 2008 (10.01.08), Claim 1; Par. Nos. [0001], [0008] (Family: none) | 1-3 |
| A | JP 2003-192842 A  (Sumitomo Rubber Industries, Ltd.), 09 July, 2003 (09.07.03), Claim 1; Par. Nos. [0011], [0013], [0024] (Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006233177 A